(19) Europäisches Patentamt
European Patent Office
Office européen des brevets

(11) EP 4 657 541 A1

(12) **EUROPEAN PATENT APPLICATION**
published in accordance with Art. 153(4) EPC

(43) Date of publication:
**03.12.2025 Bulletin 2025/49**

(21) Application number: **24747457.0**

(22) Date of filing: **25.01.2024**

(51) International Patent Classification (IPC):
***H01M 4/131*** *(2010.01)* ***H01M 10/052*** *(2010.01)*
***H01M 4/525*** *(2010.01)* ***H01M 4/505*** *(2010.01)*
***H01M 4/62*** *(2006.01)* ***H01M 4/02*** *(2006.01)*

(52) Cooperative Patent Classification (CPC):
**H01M 10/052; H01M 4/02; H01M 4/131; H01M 4/382; H01M 4/505; H01M 4/525; H01M 4/62; H01M 4/622; H01M 4/625;**
H01M 2004/021; H01M 2004/027; H01M 2004/028; Y02E 60/10

(86) International application number:
**PCT/KR2024/001188**

(87) International publication number:
**WO 2024/158223 (02.08.2024 Gazette 2024/31)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.01.2023 KR 20230009215**

(71) Applicant: **Ubatt Inc.**
**Seoul 04194 (KR)**

(72) Inventors:
- **LEE, Chang-Kyoo**
  **Seoul 04194 (KR)**
- **KIM, Chang-Hyeon**
  **Daejeon 34087 (KR)**
- **CHOI, Keun-Ho**
  **Jeju-si, Jeju-do 63346 (KR)**
- **KIM, Jung-Hwan**
  **Daejeon 34322 (KR)**
- **CHO, Seok-Kyu**
  **Daejeon 34018 (KR)**
- **JO, Hyeong-Min**
  **Daejeon 34052 (KR)**

(74) Representative: **Kador & Partner Part mbB**
**Corneliusstraße 15**
**80469 München (DE)**

(54) **HIGH ENERGY DENSITY ELECTROCHEMICAL DEVICE**

(57) The present disclosure relates to an electrochemical device that can simultaneously satisfy a high energy density of 400 Wh/kg or more, excellent lifespan characteristics, and stability. The electrochemical device according to the present disclosure includes a cathode; an anode including an anode current collector, or the anode current collector and lithium metal; and an electrolyte; wherein the cathode includes a cathode current collector; and a cathode active material layer formed on the cathode current collector, and including a porous binder scaffold and cathode active material particles.

FIG. 1

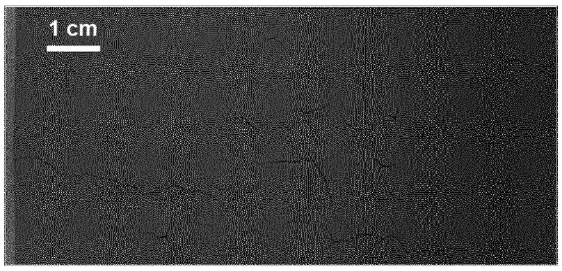


EP 4 657 541 A1

## Description

### Technical Field

The present disclosure relates to an electrochemical device having a high energy density, and more specifically, to a lithium metal battery or an anode-free lithium battery, having a high energy density.

### Background Art

Recently, as the required energy density of batteries has rapidly increased, the development of high-capacity lithium batteries is urgent. To this end, research for replacing existing anode materials such as graphite, silicon, or the like with lithium metal or for developing anode-free batteries has been proposed, it is difficult to meet the gradually increasing battery performance requirements simply by changing the anode materials. Accordingly, in addition to changing the anode materials, research on thick film type cathodes in which a thickness of a cathode active material layer increases by increasing density/loading of a cathode active material is actively underway.

However, as the cathode active material layer becomes thicker, it is difficult to secure stable performance and lifespan characteristics of batteries, so there is a practical limit to an increase in thickness. For example, the thick film type cathodes have a fundamental problem in that the cathode material is distributed unevenly. This may cause uneven flow characteristics of lithium ions, and uneven charge/discharge characteristics, a polarization phenomenon, or the like, in a thickness direction thereof, to occur. In addition, there may be a problem of deteriorating performance of the batteries due to an increase in movement distance of lithium ions due to an increase in thickness of the cathode.

In addition, the uneven flow characteristics of lithium ions further aggravate the problem of generating a dendrite on a surface of lithium metal, which not only shortens lifespans of the batteries but also reduces stability of the batteries.

### Summary of Invention

### Technical Problem

An aspect of the present disclosure is to provide an electrochemical device that can simultaneously satisfy a high energy density of 400 Wh/kg or more, excellent lifespan characteristics, and stability.

### Solution to Problem

According to an aspect of the present disclosure, an electrochemical device includes a cathode; an anode including an anode current collector, or the anode current collector and lithium metal; and an electrolyte, and having an energy density of 400 Wh/kg or more, wherein the cathode includes a cathode current collector; and a cathode active material layer formed on the cathode current collector, wherein the cathode active material layer includes a porous binder scaffold and cathode active material particles.

The energy density of the electrochemical device may be 450 Wh/kg to 650 Wh/kg.

The electrochemical device may further include a separator.

The cathode active material layer may be included in an amount of 50% by weight or more, based on a total weight of the electrochemical device.

The cathode active material layer may be included in an amount of 60 to 85% by weight, based on a total weight of the electrochemical device.

The cathode active material particles may be included in an amount of 80 to 99% by weight, based on a total weight of the cathode active material layer.

The cathode may be a thick film type cathode in which a thickness of the cathode active material layer is 50 to 2,000 μm.

The cathode may be a thick film type cathode in which a capacity of the cathode active material layer, formed on one surface of the cathode current collector, is 4 to 150 $mAh/cm^2$.

The cathode may be a thick film type cathode in which a mixture density (g/cc) of the cathode active material layer is 3.3 to 3.8.

In the cathode active material layer, the cathode active material particles may be evenly dispersed, and the porous binder scaffold may be present in an empty space between the particles.

The porous binder scaffold may be included in an amount of 0.01 to 40 parts by weight, based on 100 parts by weight of the cathode active material particles.

The porous binder scaffold further comprises a conductive material.

The cathode active material layer may further include a metal salt.

The metal salt may be included in an amount of 0.01 to 50 parts by weight, based on 100 parts by weight of the cathode active material particles.

The metal salt may be included in or surface adsorbed on at least one of the porous binder scaffold or the cathode active material particles.

The metal salt may be a sulfonyl group-containing metal salt selected from the following Formula 1 or 2:

[Formula 1]

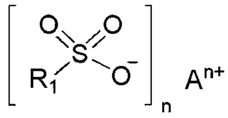

[Formula 2]

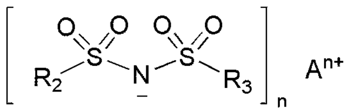

In Formulas 1 and 2,

n is 1 or 2;
A is an n-valent cation;
$R_1$ to $R_3$ are each independently fluoro(C1-C7)alkyl or a fluoro group.

A may be lithium, sodium, zinc, copper, aluminum, silver, gold, cesium, indium, magnesium, or calcium.

When a cross-section of the cathode active material layer is analyzed using X-ray CT, a deviation between a conductive material concentration ($C_1$) of a first active material layer ranging from a border surface between the cathode current collector and the cathode active material layer to a 1/3 point of a thickness direction of the cathode active material layer, a conductive material concentration ($C_2$) of a second active material layer ranging from the 1/3 point to a 2/3 point of the thickness direction of the cathode active material layer, and a conductive material concentration ($C_3$) of a third active material layer ranging from the 2/3 point of the thickness direction of the cathode active material layer to a surface of the cathode active material layer is 10% or less, based on a conductive material average concentration ($C_0$) of the cathode active material layer.

A half-cell prepared with the cathode may have a discharge capacity maintenance rate of 80% or more at 0.3 C relative to a discharge capacity at 0.1 C.

The electrolyte may be a liquid electrolyte, a solid electrolyte, or a combination thereof.

A ratio (g/Ah) of an injection amount of the electrolyte relative to a capacity of the electrochemical device may be less than 1.2.

The electrolyte may be included in an amount of 15 to 30 parts by weight, based on 100 parts by weight of the cathode.

The electrochemical device may have a 0.1C discharge capacity implementation ratio of 0.9 or more relative to a designed capacity.

The electrochemical device may be a lithium metal battery or an anode-free lithium battery.

The cathode may have a tortuosity ($\tau$) of 6 or less in the electrode calculated by the following relationship.

[Relationship]

$$\tau \text{ (Tortuosity)} = (K_{electrolyte}/K_{electrode}) \times \text{(Porosity)}$$

**where,** $K_{electrolyte}$ refers to ionic conductivity of the electrolyte, $K_{electrode}$ refers to ionic conductivity of the cathode, and Porosity refers to porosity of the cathode.

Advantageous Effects of Invention

A lithium metal battery according to the present disclosure may simultaneously satisfy a high energy density of

400 Wh/kg or more, excellent lifespan characteristics, and stability. Specifically, the lithium metal battery according to an aspect may effectively suppress occurrence of a polarization phenomenon even though a thick film type cathode is employed, and may implement uniform charge and discharge characteristics.

Brief Description of Drawings

FIG. 1 illustrates results of SEM analysis of a surface of a cathode prepared in Comparative Example 1.
FIG. 2 illustrates results of SEM analysis of a surface of a cathode prepared in Inventive Example 1.
FIG. 3 illustrates results of SEM analysis of a cross-section of a cathode prepared in Comparative Example 1.
FIG. 4 illustrates results of SEM analysis of a cross-section of a cathode prepared in Inventive Example 1.
FIG. 5 is a graph illustrating distribution of conductive materials in a thickness direction of a cathode, based on results of X-ray CT analysis of a cross-section of a cathode prepared in (a) Comparative Example 1 and (b) Inventive Example 1.
FIG. 6 is a graph illustrating distribution of conductive material amounts (vol%) in a first active material layer, a second active material layer, and a third active material layer, according to results of X-ray CT.

Best Mode for Invention

Unless otherwise defined herein, technical terms and scientific terms have the same meaning as generally understood by person skilled in the art to which the present disclosure pertains, unless otherwise defined. The terminology used in the description herein may be merely to effectively describe particular embodiments and may not be intended to limit the invention.

As used herein, singular forms "a," "an," and "the" may be intended to also include a plural form, unless otherwise indicated in the context.

In the present specification and the appended claims, when a portion of a film (layer), a region, a component, or the like is said to be on or above a different portion, it does not only mean that the portion is in contact with and on the different portion, but also that a different film (layer), a different region, a different component, or the like is interposed therebetween.

In addition, numerical ranges used in the present specification may include a lower limit, an upper limit, all values therebetween, increments logically derived from shapes and widths of the defined ranges, all double-defined values, and all possible combinations of upper and lower limits of numerical ranges defined in different forms. Unless otherwise specified herein, values outside the numerical ranges that may occur due to experimental error or rounding of values may be also included in the defined numerical ranges.

The term "comprise" or "include" in the present specification may be an open description having a meaning, equivalent to an expression such as "provide," "contain," "have," "(be) characterized (by or in that)," "feature," or the like, and may not exclude a component, a material, or a process.

As used herein, the term "porous binder scaffold" refers to a network structure formed three-dimensionally uniformly by a binder, which means a structure in which the binder forms a skeleton, and pores are abundantly developed within the skeleton. The pores may have an open pore structure, and the porous network structure formed by the binder may serve as a support on which a cathode active material and a conductive material are evenly distributed. The pores may have a diameter of 0.1 $\mu$m to 50 $\mu$m, specifically a diameter of 0.5 $\mu$m to 10 $\mu$m. More specifically, the porous binder scaffold may be a support that may include fibers as a unit structure by self-assembly of the organic binder and the conductive material, and a thin internal wall structure by secondary self-assembly of fibrous unit structures. For example, the binder scaffold may be an open-cell foam formed of the internal wall structure, and an internal space thereof may be divided by the internal wall structure. More specifically, the internal wall structure may be a porous internal wall, and the internal space may include a number of pores, coarser than the pores formed in the internal wall structure. The cathode active material may be located in the internal space. More specifically, the cathode active material may be located in the internal space, and may be in contact with and fixed to the porous internal wall structure. The binder scaffold structure may form a conductive network, superior than a fibrous network structure, and may have excellent adhesion to the cathode active material particles.

To meet required performance of next-generation lithium batteries, an existing anode material should be replaced with lithium metal or formed to be anode-free, and in addition, there is a need to further increase capacity by combining thick film cathodes having an increased thickness of the cathode active material layer by increasing a density/loading of the cathode active material. However, the prior art may have fundamental limitations to techniques, such as uneven distribution of cathode materials, occurrence of cracks, or the like, as the cathode active material layer becomes thicker, which causes to occur problems of deteriorating lifespan characteristics and stability of the batteries, and

research to solve the problems continues.

The present disclosure is to solve the problems of the prior art as described above, and to provide an electrochemical device that can simultaneously satisfy a high energy density of 400 Wh/kg or more, excellent lifespan characteristics, and stability. In this case, when calculating energy density, a weight (kg) of the electrochemical device refers to a weight of a final product including weights of auxiliary materials such as a pouch, a tab, and the like.

Specifically, an electrochemical device according to an embodiment may include a cathode; an anode including an anode current collector, or the anode current collector and lithium metal; and an electrolyte; wherein the cathode is characterized by including a cathode current collector; and a cathode active material layer formed on the cathode current collector, and including a porous binder scaffold and cathode active material particles.

In this case, the porous binder scaffold refers to a network structure in which a binder forms a skeleton and pores are abundantly developed within the skeleton, and the porous network structure may serve as a support on which cathode materials such as a cathode active material, a conductive material, and the like are evenly distributed. For example, in a cathode according to an embodiment, cracks may not occur by making the binder component microporous, even when the cathode is thickened, and the cathode material may be distributed very evenly, to maintain excellent performance of a battery.

For example, even though an electrochemical device according to an embodiment adopts a thick film type cathode capable of realizing a high energy density of 400 Wh/kg or more, 450 Wh/kg to 750 Wh/kg, or 450 Wh/kg to 650 Wh/kg, both excellent lifespan characteristics and stability may be satisfied.

An electrochemical device according to an embodiment may include a cathode active material layer in an amount of 50% by weight or more, 55% by weight or more, or 60% by weight or more, or 95% by weight or less, 90% by weight or less, or 88% by weight or less, or in an amount of 50 to 90% by weight, 60 to 90% by weight, or 60 to 85% by weight, based on a total weight of the electrochemical device.

In addition, with respect to a total weight of the cathode active material layer, the cathode active material particles may be included in an amount of 70% by weight or more or 80% by weight or more, or 99% or less, 97% or less, 95% or less, 93% or less, or 90% or less, or in an amount of 70 to 99% by weight or 80 to 99% by weight.

In addition, the cathode may be a thick film type cathode in which a thickness of the cathode active material layer is 50 μm or more, 100 μm or more, or 200 μm or more, or 2,000 μm or less, 1,500 μm or less, or 1,000 μm or less, and 150 to 2,000 μm, 100 to 2,000 μm, 100 to 1,000 μm, 100 to 500 μm, or 200 to 500 μm.

Additionally, the cathode may be a thick film type cathode in which a capacity of the cathode active material layer, formed on one surface of the cathode current collector, is 4 to 150 $mAh/cm^2$, 4 to 100 $mAh/cm^2$, or 5 to 50 $mAh/cm^2$.

In addition, the cathode may be a thick film type cathode in which a mixture density (g/cc) of the cathode active material layer is 2.0 or more, 2.5 or more, 3.0 or more, and 2.0 to 5.0, 3.0 to 5.0, or 3.3 to 3.8.

In addition, the cathode may have a tortuosity ($\tau$) in the electrode calculated by the following relationship of 10 or less, 9 or less, 8 or less, 7 or less, or 6 or less, but is not limited to, 1 or more. Specifically, the tortuosity in the electrode may be 1 to 10, 2 to 9, 3 to 8, 4 to 7, or 5 to 6.

[Relationship]

$$\tau\text{(Tortuosity)} = (K_{electrolyte}/K_{electrode}) \times \text{(Porosity)}$$

where, $K_{electrolyte}$ refers to ionic conductivity of the electrolyte, $K_{electrode}$ refers to ionic conductivity of the cathode, and Porosity refers to porosity of the cathode.

An electrochemical device including such a cathode may have excellent ionic conductivity, and may have excellent performance of the battery, because an ion transfer path in the electrode may be relatively short.

In addition, a half-cell prepared with the cathode may have a discharge capacity maintenance rate of 80% or more, 85% or more, or 90% or more, and 80% to 99% or 90% to 98% at 0.3 C, relative to a discharge capacity at 0.1 C. As a non-limiting example, measurement of the discharge capacity maintenance rates at 0.1 C and 0.3 C may be, but is not limited to, maintenance rates measured after 1 charge, 5 charges, 10 charges, or 30 charges.

In addition, an electrochemical device according to an embodiment may have a 0.1C discharge capacity implementation ratio of 0.8 or more, 0.85 or more, 0.9 or more, or 0.95 or more, and 0.8 to 1.0, 0.9 to 1.0, or 0.95 to 1.0, relative to a designed capacity. In this case, the design capacity refers to a theoretical value calculated from a total weight of the cathode active material included in a cell, and a reversible discharge capacity of the cathode active material.

For example, a cathode active material layer according to an embodiment may not generate any cracks even though a high density/loading, cathode materials may be dispersed very evenly in a thickness direction, and a cathode active material layer according to an embodiment may effectively maintain uniform flow characteristics of lithium ions and uniform charge/discharge characteristics in the thickness direction.

In addition, a cathode active material layer according to an embodiment may realize excellent mechanical

properties even by using a trace amount of binder, as the binder forms a porous scaffold structure, and thus an amount of the cathode active material may further increase, resulting in superior energy density.

For example, the porous binder scaffold may be included in an amount of 0.01 to 40 parts by weight, 0.01 to 20 parts by weight, 0.01 to 10 parts by weight, 0.01 to 5 parts by weight, or 0.01 to 1 part by weight, based on 100 parts by weight of the cathode active material particles.

The porous binder scaffold may be a polymer binder commonly used in the relevant technical field, and either an aqueous polymer binder or a non-aqueous polymer binder may be used. Specifically, the polymer binder may be a fluorine-based resin, a rubber-based resin, a polyolefin-based resin, an acryl-based resin, an imide-based resin, a cellulose-based resin, or the like. More specifically, the polymer binder may include polyvinylidene fluoride, polytetrafluoroethylene, polyvinylidene fluoride-hexafluoropropylene, polyvinylpyrrolidone, polyacrylonitrile, polyvinylidene fluoride-trichloroethylene, polyvinylidene fluoride-chlorotrifluoroethylene, polymethyl methacrylate, polyvinyl acetate, an ethylene-co-vinyl acetate copolymer, polyethylene oxide, cellulose acetate, cellulose acetate butylate, cellulose acetate propionate, cyanoethyl pullulan, cyanoethyl polyvinyl alcohol, cyanoethyl cellulose, cyanoethyl sucrose, pullulan, carboxymethyl cellulose, an acrylonitrile styrene butadiene copolymer, polyimide, polyvinyl alcohol, carboxymethyl cellulose, starch, hydroxypropylcellulose, regenerated cellulose, polyvinylpyrrolidone, tetrafluoroethylene, polyethylene, polypropylene, an ethylene-propylene-diene terpolymer (EPDM), sulfonated EPDM, a styrene butyrene rubber, a nitrile butadiene rubber, a fluorine rubber, mixtures thereof, or the like, but is not limited thereto.

In addition, a cathode active material layer according to an embodiment may further include a conductive material, and in this case, the conductive material may be present as being included or adsorbed on the porous binder scaffold.

The conductive material is not particularly limited as long as it may be commonly used in the relevant technical field, but as a non-limiting example, may be a carbon-based conductive material, and the carbon-based conductive material may include a point-shaped carbon-based conductive material, a linear carbon-based conductive material, a plate-shaped carbon-based conductive material, or a mixture thereof. The point-shaped carbon-based conductive material may include acetylene black, Ketjen black, channel black, furnace black, lamp black, thermal black, carbon black, or the like, the linear carbon-based conductive material may include a carbon nanotube, a conductive carbon fiber, or the like, and the plate-shaped carbon-based conductive material may include graphene (including GRO) or the like.

In addition, a cathode active material layer according to an embodiment may further include a metal salt, and the metal salt may be included in or surface adsorbed on at least one of the porous binder scaffold or the cathode active material particles. Specifically, a metal ion of the metal salt may be a metal ion (an active ion) involved in an electrochemical reaction, and the salt may induce effective complexation of the carbon-based conductive material and the binder, and may be included in at least one of the porous binder scaffold or the cathode active material, or may remain in a state of being surface adsorbed, and may remain in an inherent crystalline phase of the salt.

The metal salt may be included in an amount of 0.01 to 50 parts by weight, 0.01 to 30 parts by weight, 0.01 to 10 parts by weight, or 0.01 to 1 part by weight, based on 100 parts by weight of the cathode active material particles.

The metal salt may be a sulfonyl group-containing metal salt, and in this case, may remain in the electrode to further improve electrochemical characteristics of the electrode, improve flame retardancy of the electrode, and further improve wettability to the liquid electrolyte.

A molecular weight (g/mole) of the sulfonyl group-containing metal salt may be 1000 or less, specifically 500 or less, and more specifically 400 or less, and 10 or more, 20 or more, or 30 or more. In addition, the sulfonyl group-containing metal salt may have 1 to 4 anions, specifically 1 to 3 anions, and more specifically 1 to 2 anions per molecule of the metal salt.

Specifically, the metal salt may be selected from the following Formula 1 or 2, but is not limited thereto:

[Formula 1]

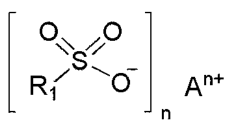

[Formula 2]

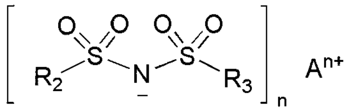

In Formulas 1 and 2,

n is 1 or 2;
A is an n-valent cation;
$R_1$ to $R_3$ are each independently fluoro($C_1$-$C_7$)alkyl or a fluoro group.

For example, $R_1$ to $R_3$ may each independently be F, $CFH_2$, $CF_2H$, $CF_3$, $C_2F_5$, $C_3F_7$, $C_4F_9$, or $C_5H_{11}$.

For example, A may be a monovalent cation or a divalent cation, the monovalent cation may be an alkali metal ion, and the divalent cation may be selected from an alkaline earth metal ion or a post-transition metal ion. Specifically, A may be lithium, sodium, zinc, copper, aluminum, silver, gold, cesium, indium, magnesium, or calcium.

For example, the sulfonyl group-containing metal salt may any one or two or more selected from lithium trifluoromethanesulfonate, lithium bis(fluorosulfonyl)imide, lithium bis(trifluoromethanesulfonyl)imide, lithium bis(perfluoroethanesulfonyl) imide, zinc trifluoromethanesulfonate, zinc di[bis(trifluoromethylsulfonyl)imide], or the like.

When a cross-section of a cathode active material layer according to an embodiment is analyzed using X-ray CT, a deviation between a conductive material concentration ($C_1$) of a first active material layer ranging from a border surface between the cathode current collector and the cathode active material layer to a 1/3 point of a thickness direction of the cathode active material layer, a conductive material concentration ($C_2$) of a second active material layer ranging from the 1/3 point to a 2/3 point of the thickness direction of the cathode active material layer, and a conductive material concentration ($C_3$) of a third active material layer ranging from the 2/3 point of the thickness direction of the cathode active material layer to a surface of the cathode active material layer may be 10% or less, based on a conductive material average concentration ($C_0$) of the cathode active material layer.

For example, it is characterized in that, as a cathode active material layer according to an embodiment forms a porous binder scaffold by making the binder component microporous, cathode materials such as the conductive material, the cathode active material particles, and the like may be very uniformly distributed in a thickness direction even as a thickness of the cathode active material layer increases.

A first embodiment of an electrochemical device according to an embodiment may be a lithium metal battery including a thick film type cathode, as described above; an anode including an anode current collector and lithium metal formed on the anode current collector; and an electrolyte.

In addition, a second embodiment of an electrochemical device according to an embodiment may be an anode-free lithium battery including a thick film type cathode, as described above; an anode current collector; and an electrolyte.

Non-limiting examples of the anode current collector may be selected from a foil or the like prepared by copper, gold, nickel, copper alloy, or a combination thereof, and non-limiting examples of the cathode current collector may be a foil or the like prepared by aluminum, nickel, or a combination thereof.

A cathode active material according to an embodiment may be a nickel-cobalt-manganese-based cathode active material, and may be represented by the following Formula 11.

[Formula 11] $LiNi_aCo_bMn_cO_2$

In Formula 11, a+b+c=1, 0.5<a<1.0, 0<b<0.5, and 0<c<0.5.

For example, a+b+c=1, 0.6≤a≤0.9, 0<b≤0.2, and 0<c≤0.2.

Specifically, a cathode active material according to an embodiment may be $LiNi_{0.6}Co_{0.2}Mn_{0.2}O_2$, $LiNi_{0.8}Co_{0.1}Mn_{0.1}O_2$, $LiNi_{0.88}Co_{0.06}Mn_{0.06}O_2$, $LiNi_{0.9}Co_{0.05}Mn_{0.05}O_2$, or a mixture thereof, but is not limited thereto.

The electrolyte may be a liquid electrolyte, a solid electrolyte, or a combination thereof, specifically a liquid electrolyte, and the liquid electrolyte may include a non-aqueous organic solvent and a lithium salt.

The non-aqueous organic solvent may be selected from a cyclic carbonate-based solvent, a linear carbonate-based solvent, and a mixed solvent thereof, the cyclic carbonate-based solvent may be selected from the group consisting of ethylene carbonate, propylene carbonate, butylene carbonate, vinylene carbonate, vinylethylene carbonate, fluoroethylene carbonate, and a mixture thereof, and the linear carbonate-based solvent may be selected from the group consisting of dimethyl carbonate, diethyl carbonate, dipropyl carbonate, ethylmethyl carbonate, methylpropyl carbonate, methyl isopropyl carbonate, ethyl propyl carbonate, and a mixture thereof. Specifically, the non-aqueous organic solvent may be a mixed solvent of the cyclic carbonate-based solvent and the linear carbonate-based solvent, and a mixing

volume ratio of the cyclic carbonate-based solvent and the linear carbonate-based solvent may be used by mixing in a volume ratio of 1:1 to 9, or 1:1 to 4.

The lithium salt may be used by mixing one type or a mixture of two or more types selected from the group consisting of $LiPF_6$, $LiBF_4$, $LiSbF_6$, $LiAsF_6$, $LiClO_4$, $LiCF_3SO_3$, $LiN(SO_2CF_3)_2$, $LiN(SO_{2C2}F_5)_2$, $LiC (SO_2CF_3)_3$, $LiN (SO_3CF_3)_2$, $LiC_4F_9SO_3$, $LiAlO_4$, $LiAlCl_4$, LiCl, and LiI, but is not limited thereto. A concentration of the lithium salt may be 0.6 M to 2.0 M.

For example, in the liquid electrolyte, a ratio (g/Ah) of an injection amount of the electrolyte relative to a capacity of an electrochemical device according to an embodiment may be less than 2.0, less than 1.5, less than 1.2, or less than 1.1. Additionally, the liquid electrolyte may be included in an amount of 10 to 30 parts by weight, 10 to 25 parts by weight, or 15 to 25 parts by weight, based on 100 parts by weight of the cathode.

For example, the cathode of an electrochemical device according to an embodiment may have excellent wettability to an electrolyte solution, to realize further improved energy density, while reducing a usage amount of the electrolyte.

In addition, an electrochemical device according to an embodiment may further include a separator, and the separator is not limited as long as it may be commonly used in the relevant technical field, but non-limiting examples may be selected from, for example, glass fiber, polyester, polyethylene, polypropylene, polytetrafluoroethylene, or a combination thereof, may be provided as a non-woven fabric or a woven fabric, and may optionally be used in a single-layer structure or a multilayer structure.

Another embodiment of the present disclosure may provide an electrochemical device including a cathode; an anode current collector, or an anode including the anode current collector and lithium metal; and an electrolyte, and having an energy density of 400 Wh/kg or more, wherein the cathode includes a cathode current collector; and a cathode active material layer formed on the cathode current collector, and including cathode active material particles, a binder, and a conductive material, wherein, when a cross-section of the cathode active material layer is analyzed using X-ray CT, a deviation between a conductive material concentration ($C_1$) of a first active material layer ranging from a border surface between the cathode current collector and the cathode active material layer to a 1/3 point of a thickness direction of the cathode active material layer, a conductive material concentration ($C_2$) of a second active material layer ranging from the 1/3 point to a 2/3 point of the thickness direction of the cathode active material layer, and a conductive material concentration ($C_3$) of a third active material layer ranging from the 2/3 point of the thickness direction of the cathode active material layer to a surface of the cathode active material layer is 10% or less, based on a conductive material average concentration ($C_0$) of the cathode active material layer.

A third embodiment of an electrochemical device according to an embodiment may be a lithium metal battery including a cathode, as described above; an anode including an anode current collector and lithium metal formed on the anode current collector; and an electrolyte.

In addition, a fourth embodiment of an electrochemical device according to an embodiment may be an anode-free lithium battery including a cathode, as described above; an anode current collector; and an electrolyte.

Hereinafter, descriptions of types of a cathode active material particle, a binder, a conductive material, an anode current collector, and an electrolyte will be omitted, due to overlapping thereof, as described above.

In an electrochemical device according to an embodiment, the binder may form a porous binder scaffold structure forming a skeleton of a network structure in which pores are abundantly developed, and the porous network structure may serve as a support on which cathode materials such as a cathode active material, a conductive material, and the like are evenly distributed. For example, in a cathode according to an embodiment, cracks may not occur by making the binder component microporous, and the cathode material may be distributed very evenly, to maintain excellent performance of a battery.

Specifically, even though an electrochemical device according to an embodiment adopts a thick film type cathode capable of realizing a high energy density of 400 Wh/kg or more, 450 Wh/kg to 750 Wh/kg, or 450 Wh/kg to 650 Wh/kg, both excellent lifespan characteristics and stability may be satisfied.

An electrochemical device according to an embodiment may include a cathode active material layer in an amount of 50% by weight or more, 55% by weight or more, or 60% by weight or more, or 95% by weight or less, 90% by weight or less, or 88% by weight or less, or in an amount of 50 to 90% by weight, 60 to 90% by weight, or 60 to 85% by weight, based on a total weight of the electrochemical device.

In addition, with respect to a total weight of the cathode active material layer, the cathode active material particles may be included in an amount of 70% by weight or more or 80% by weight or more, or 99% or less, 97% or less, 95% or less, 93% or less, or 90% or less, or in an amount of 70 to 99% by weight or 80 to 99% by weight.

In addition, the cathode may be a thick film type cathode in which a thickness of the cathode active material layer is 50 μm or more, 100 μm or more, or 200 μm or more, or 2,000 μm or less, 1,500 μm or less, or 1,000 μm or less, and 150 to 2,000 μm, 100 to 2,000 μm, 100 to 1,000 μm, 100 to 500 μm, or 200 to 500 μm.

Additionally, the cathode may be a thick film type cathode in which a capacity of the cathode active material layer, formed on one surface of the cathode current collector, is 4 to 150 $mAh/cm^2$, 4 to 100 $mAh/cm^2$, or 5 to 50 $mAh/cm^2$.

In addition, the cathode may be a thick film type cathode in which a mixture density (g/cc) of the cathode active material layer is 2.0 or more, 2.5 or more, 3.0 or more, and 2.0 to 5.0, 3.0 to 5.0, or 3.3 to 3.8.

In addition, a half-cell prepared with the cathode may have a discharge capacity maintenance rate of 80% or more, 85% or more, or 90% or more, and 80% to 99% or 90% to 98% at 0.3 C, relative to a discharge capacity at 0.1 C. As a non-limiting example, measurement of the discharge capacity maintenance rates at 0.1 C and 0.3 C may be, but is not limited to, maintenance rates measured after 1 charge, 5 charges, 10 charges, or 30 charges.

In addition, an electrochemical device according to an embodiment may have a 0.1C discharge capacity implementation ratio of 0.8 or more, 0.85 or more, 0.9 or more, or 0.95 or more, and 0.8 to 1.0, 0.9 to 1.0, or 0.95 to 1.0, relative to a designed capacity. In this case, the design capacity refers to a theoretical value calculated from a total weight of the cathode active material included in a cell, and a reversible discharge capacity of the cathode active material.

For example, a cathode active material layer according to an embodiment may not generate any cracks even though a high density/loading, cathode materials may be dispersed very evenly in a thickness direction, and a cathode active material layer according to an embodiment may effectively maintain uniform flow characteristics of lithium ions and uniform charge/discharge characteristics in the thickness direction.

In addition, a cathode active material layer according to an embodiment may realize excellent mechanical properties even by using a trace amount of binder, as the binder forms a porous scaffold structure, and thus an amount of the cathode active material may further increase, resulting in superior energy density.

For example, the porous binder scaffold may be included in an amount of 0.01 to 40 parts by weight, 0.01 to 20 parts by weight, 0.01 to 10 parts by weight, 0.01 to 5 parts by weight, or 0.01 to 1 part by weight, based on 100 parts by weight of the cathode active material particles.

In addition, a cathode active material layer according to an embodiment may further include a metal salt, and the metal salt may be included in or surface adsorbed on at least one of the porous binder scaffold or the cathode active material particles.

The metal salt may be included in an amount of 0.01 to 50 parts by weight, 0.01 to 30 parts by weight, 0.01 to 10 parts by weight, or 0.01 to 1 part by weight, based on 100 parts by weight of the cathode active material particles. The description of types of the salt may be the same as described above, and will thus be omitted.

Additionally, a ratio (g/Ah) of an injection amount of the electrolyte relative to a capacity of an electrochemical device according to an embodiment may be less than 2.0, less than 1.5, less than 1.2, or less than 1.1. Additionally, the liquid electrolyte may be included in an amount of 10 to 30 parts by weight, 10 to 25 parts by weight, or 15 to 25 parts by weight, based on 100 parts by weight of the cathode.

For example, the cathode of an electrochemical device according to an embodiment may have excellent wettability to an electrolyte solution, to realize a further improved energy density, while reducing a usage amount of the electrolyte.

In an embodiment of the present disclosure, a means for forming a porous binder scaffold by making the binder component microporous is not particularly limited, but may include, for example, using a pore former when preparing a cathode material slurry, The pore former may be, for example, a mixed solvent of two or more solvents having different solubility parameters, a metal salt, or a combination thereof.

The description of the metal salt may be the same as described above, and thus will be omitted.

Specifically, the mixed solvent may be a mixed solvent of a first solvent and a second solvent, having different solubility parameters, and the first solvent and the second solvent may have different solubilities for the binder due to the different solubility parameters. Due to the different solubilities between the solvents, solidification of the binder may occur in a state in which the solvent remains during a drying process of the cathode material slurry, porousization of the binder component may occur in the cathode by volatilization of a residual binder during and/or after solidification of the binder.

A difference in solubility parameters between the first solvent and the second solvent may be 0.1 to 20, 0.1 to 10, 0.1 to 5, or 1 to 5, and specifically, 0.5 or more, 1 or more, 2 or more, 3 or more, or 4 or more, or 15 or less, 10 or less, 9 or less, 8 or less, 7 or less, 6 or less, or 5 or less.

In this case, the solubility parameter (based on 25°C) may be based on a value known through the Hansen solubility parameter (e.g., Charles Hansen, "Hansen Solubility Parameters: A User's Handbook" CRC Press (2007), "The CRC Handbook and Solubility Parameters and Cohesion Parameters," Allan F. M. Barton (1999), etc.) published for each material or a value calculated by commercial software, such as Molecular Modeling Pro, Dynacomp Software, or the like, and the Hansen solubility parameter for each material may be a value known to those skilled in the art or may be easily calculated thereby.

For example, if a solvent having excellent solubility in a binder is referred to as a first solvent and a solvent having poor solubility in a binder is referred to as a second solvent, the second solvent may serve as a pore former, and a relative amount between the first solvent and the second solvent may be controlled to control a degree of porosity of the binder. For example, a weight ratio of the first solvent and the second solvent may be 1:0.1 to 10, 1:0.1 to 5, 1:0.1 to 1, or 1:0.1 to 0.5, but the present disclosure is not necessarily limited thereto.

A method of manufacturing an electrochemical device according to the present disclosure is not particularly

limited, as long as the cathode, the anode, and the electrolyte may be used, and may be performed by conventionally known methods.

A method of manufacturing a cathode according to an embodiment may include applying a cathode material slurry including a cathode active material, a conductive material, a binder, and a salt, as described above, onto a current collector; and drying the applied cathode material slurry.

Application of the cathode material slurry may be carried out by one or more methods selected from spin coating, roll coating, spray coating, dip coating, flow coating, doctor blade, dispensing, inkjet printing, offset printing, stencil printing, screen printing, pad printing, gravure printing, reverse gravure printing, gravure offset printing, flexography printing, stencil printing, imprinting, xerography, slot die coating, bar coating, roll-to-roll coating, and the like, but the present disclosure is not limited thereto.

After the application of the cathode material slurry is performed, drying a coating of the slurry (an applied cathode slurry) by applying energy may be further performed. The applied energy may be heat energy, light energy, or heat and light energy, and application of the heat and light energy may include sequential application or simultaneous application. When the light energy is applied, light may be near-infrared light, which may be a heat ray.

The cathode material slurry may be prepared by mixing a cathode active material, a conductive material, a binder, and a salt, as described above, with a mixed solvent, as described above. When the cathode material slurry is prepared, an order in which the cathode active material, the conductive material, the binder, and the salt are added is not particularly limited. For example, the cathode material slurry may be prepared by adding and mixing the cathode active material, the conductive material, the binder, and the salt simultaneously to and with the solvent. As another example, the cathode material slurry may be prepared by adding the cathode active material to a mixture in which the conductive material, the binder, and the salt are first mixed. The cathode material slurry prepared in this manner may form a more stable porous binder scaffold structure, when dried later to form a cathode active material layer.

Hereinafter, embodiments, as described above, will be described in more detail through examples. However, the following examples are only illustrative and do not limit the scope of rights.

Mode for Invention

**< Preparation of Lithium Metal Battery** >

**(Inventive Example 1)**

<u>Preparation of Cathode</u>

95 parts by weight of lithium-nickel-manganese-cobalt composite oxide ($LiNi_{0.6}Co_{0.2}Mn_{0.2}O_2$) with an average particle diameter of 5 μm as a cathode active material, 2 parts by weight of Super-P with an average particle diameter of 40 nm as a conductive material, 3 parts by weight of polyvinylidene fluoride as a binder, and 1.5 parts by weight of lithium trifluoromethanesulfonate as a salt were used to prepare a cathode material. A cathode material slurry was prepared by using a mixed solvent obtained by mixing 37.5 parts by weight of N-methyl-2-pyrrolidone and 7.5 parts by weight of propylene carbonate, and adding the cathode material to the mixed solvent so that an amount of the cathode material was 55% by weight. A cathode of Inventive Example 1 in which cathode active material particles were evenly distributed in a porous binder scaffold structure was prepared by applying the cathode material slurry to an aluminum thin film with a thickness of 20 μm using a doctor blade, drying the same with hot air at 100°C, vacuum drying the same at 130°C for 24 hours, and rolling the same with a roll press to form a cathode active material layer with a thickness of 200 μm.

<u>Preparation of Lithium Metal Battery</u>

A battery assembly was prepared by stacking a separator (a thickness of 13 μm, SC13-D4-BP, Gellec), the cathode prepared above, and an anode in which lithium metal with a thickness of 50 μm was rolled on a copper foil current collector with a thickness of 8 μm, as counter electrodes. A battery assembly in which an aluminum battery tab (0.1T x 7 mm) was welded on an uncoated portion of the cathode and a nickel battery tab (0.1T x 7 mm) was welded on an uncoated portion of the anode, by ultrasonic welding, was inserted into and sealed by a battery pouch film (153um, DNP), which was formed in conformity with the battery assembly. Thereafter, a lithium metal battery of Inventive Example 1 was prepared by injecting 1.04 g/Ah of a liquid electrolyte including 1 mole of $LiPF_6$ dissolved in a solvent in which ethylene carbonate and dimethyl carbonate were mixed at a 1:1 volume ratio.

**(Inventive Example 2)**

An anode-free lithium metal battery of Inventive Example 2 was prepared in a manner, identical to Inventive

Example 1, except that the anode-free lithium metal battery was prepared using only a copper foil current collector with a thickness of 8 μm, instead of the anode.

**(Inventive Example 3)**

A lithium metal battery of Inventive Example 3 was prepared in a manner, identical to Inventive Example 1, except that lithium-nickel-manganese-cobalt composite oxide ($LiNi_{0.9}Co_{0.05}Mn_{0.05}O_2$) with an average particle diameter of 5 μm was used as a cathode active material.

**(Inventive Example 4)**

A lithium metal battery of Inventive Example 4 was prepared in a manner, identical to Inventive Example 3, except that 0.7 g/Ah of a liquid electrolyte including 1 mole of $LiPF_6$ dissolved in a solvent in which ethylene carbonate and dimethyl carbonate were mixed at a 1:1 volume ratio was injected.

**(Inventive Example 5)**

A lithium metal battery of Inventive Example 5 was prepared in a manner, identical to Inventive Example 3, except that a thickness of a cathode active material layer was changed to have 300 μm.

**(Inventive Example 6)**

A lithium metal battery of Inventive Example 6 was prepared in a manner, identical to Inventive Example 3, except that, in preparing a cathode material slurry, a conductive material, a binder, and a salt were first mixed, a cathode active material was added to and then mixed with a mixture of the conductive material, the binder, and the salt, to prepare a cathode material slurry and an electrode.

**(Inventive Example 7)**

A lithium metal battery of Inventive Example 7 was prepared in a manner, identical to Inventive Example 6, except that a salt was mixed in an amount of 1.0 part by weight.

**(Inventive Example 8)**

A lithium metal battery of Inventive Example 8 was prepared in a manner, identical to Inventive Example 6, except that a salt was mixed in an amount of 0.5 parts by weight.

**(Inventive Example 9)**

A lithium metal battery of Inventive Example 9 was prepared in a manner, identical to in Inventive Example 3, except that an electrode prepared therein was rinsed three times in dimethyl carbonate solvent, and dried before use.

**(Comparative Example 1)**

A lithium metal battery of Comparative Example 1 was prepared in a manner, identical to Inventive Example 1, except that, in preparing a cathode, 94 parts by weight of lithium-nickel-manganese-cobalt composite oxide as a cathode active material, 3 parts by weight of Super-P as a conductive material, and 3 parts by weight of polyvinylidene fluoride as a binder were used to prepare a cathode material, and a cathode material slurry was prepared by mixing the cathode material with a single solvent of N-methyl-2-pyrrolidone.

**(Comparative Example 2)**

A lithium metal battery of Comparative Example 2 was prepared in a manner, identical to in Comparative Example 1, except that a thickness of a cathode active material layer was changed to have 70 μm.

**(Comparative Example 3)**

A lithium ion battery of Comparative Example 3 was prepared in a manner, identical to Comparative Example 2,

except that an anode was prepared using the following method was used.

Preparation of Anode

96 parts by weight of natural graphite powder as an anode active material, 1 part by weight of Super-P with an average particle diameter of 40 nm as a conductive material, 1.5% by weight of styrene-butadiene rubber as a binder, 1.5 parts by weight of carboxymethyl cellulose as an electrode material, and 100 parts by weight of distilled water were used to prepare an anode material slurry. An anode in which a active material layer with a thickness of 110 μm was coated was prepared by applying the anode material slurry to a copper thin film with a thickness of 8 μm using a doctor blade, drying the same at 120°C, and rolling the same with a roll press.

**< Evaluation 1. Performance Evaluation of Lithium Metal Battery** >

**1-1. Energy Density (Wh/kg)**

In the lithium metal batteries of Inventive Examples and Comparative Examples, an energy density was calculated by dividing a unit cell energy (Wh) value by a total weight (kg) of each of the lithium metal batteries. In this case, the total weight of the lithium metal battery refers to a weight of a final product of each of the lithium metal batteries, including weights of auxiliary materials such as a pouch, a tab, and the like, and the unit cell energy was measured by integrating a 0.05 C discharge graph.

**1-2. Capacity Implementation Rate** (%)

The lithium metal batteries of Inventive Examples and Comparative Examples were charged at a 0.1 C-rate up to 4.5 V under constant current/constant voltage (CC/CV) conditions at 25°C, and then cut-off, and were then discharged at a 0.1 C-rate up to 3.0 V (CC condition). A capacity implementation rate was evaluated as a percentage of a value of discharge capacity divided by design capacity. In this case, the design capacity refers to a value calculated from a total weight of a cathode active material included in a cell and reversible discharge capacity of the cathode active material.

Energy densities and capacity implementation rates of the lithium metal batteries prepared in Inventive Examples and Comparative Examples were evaluated, and are listed in Table 1 below. In Table 1 below, when calculating energy density, a weight (kg) of the lithium metal battery refers to a weight of a final product of each of the lithium metal batteries, including weights of auxiliary materials such as a pouch, a tab, and the like.

[Table 1]

| | **Energy Density (Wh/kg)** | **Capacity Implementation Rate(%)** |
|---|---|---|
| Inventive Example 1 | 465 | 99. 6 |
| Inventive Example 2 | 475 | 98. 9 |
| Inventive Example 3 | 559 | 98.4 |
| Inventive Example 4 | 601 | 97.9 |
| Inventive Example 5 | 642 | 96.3 |
| Inventive Example 6 | 560 | 98.7 |
| Inventive Example 7 | 561 | 98. 9 |
| Inventive Example 8 | 563 | 99.2 |
| Inventive Example 9 | 560 | 98.8 |
| Comparative Example 1 | - | - |
| Comparative Example 2 | 373 | 89.6 |
| Comparative Example 3 | 230 | 95.4 |

As illustrated in Table 1 above, it was confirmed that all lithium metal batteries according to Inventive Examples 1 to 9 simultaneously achieved excellent energy density and capacity retention rate. For example, it can be seen that a lithium metal battery according to the present disclosure may achieve high energy density while maintaining excellent lifespan characteristics even though a thickened cathode is used. On the other hand, as the cathode according to

Comparative Example 1 was thickened, a large amount of cracks occurred in the cathode active material layer, making it impossible to manufacture it as a lithium metal battery, and the lithium metal battery and the lithium ion battery according to Comparative Examples 2 and 3 were unable to achieve a desired energy density in the present disclosure.

### < Evaluation 2. Property Analysis of Cathode >

#### 2-1. Electrode Property Evaluation

Surfaces (5 mm x 5 mm) of the cathode active material layers of the cathodes prepared in Inventive Examples and Comparative Examples was observed by a scanning electron microscope (SEM) to determine whether cracks were formed on the surfaces of the cathode active material layers. SEM photographs observing the surfaces of the cathode active material layers prepared in Comparative Example 1 and Inventive Example 1 were illustrated in FIGS. 1 and 2, respectively, and results of analyzing the presence or absence of crack formation in Inventive Examples and Comparative Examples, respectively, were illustrated in Table 2 below. 'O' was indicated when a crack was formed, and 'X' was indicated when no crack was formed.

[Table 2]

| | Presence or Absence of Crack Formation (Present : O, Absent: X) |
|---|---|
| Inventive Example 1 | X |
| Inventive Example 2 | X |
| Inventive Example 3 | X |
| Inventive Example 4 | X |
| Inventive Example 5 | X |
| Inventive Example 6 | X |
| Inventive Example 7 | X |
| Inventive Example 8 | X |
| Inventive Example 9 | X |
| Comparative Example 1 | O |
| Comparative Example 2 | X |
| Comparative Example 3 | X |

FIG. 1 is a SEM photograph of a surface of the cathode active material layer according to Comparative Example 1, and FIG. 2 is an SEM photograph of a surface of the cathode active material layer according to Inventive Example 1.

Referring to FIGS. 1 and 2 and Table 1 above, it was confirmed that the cathode active material layers of Inventive Examples were formed a homogeneous surface without cracks (defects). On the other hand, in Comparative Examples, it was confirmed that multiple cracks were formed.

#### 2-2. Cross-Sectional Analysis

The cross-sections of the cathodes prepared in Comparative Example 1 and Inventive Example 1 were observed using a scanning electron microscope (SEM) and were illustrated in FIGS. 3 and 4, respectively.

Referring to FIG. 3, it can be seen that in the cathode prepared in Comparative Example 1, the binders were clumped together and had a non-uniform microstructure and pore distribution.

On the other hand, referring to FIG. 4, it can be seen that in the cathode prepared in Inventive Example 1, the cathode active material particles were evenly distributed throughout and the binder formed a uniform scaffold structure in the empty spaces between the particles. It was confirmed that the anodes prepared in Inventive Examples 2 to 9 also had a porous scaffold structure similar to the cathode prepared in Inventive Example 1.

#### 2-3. X-Ray CT Analysis

The cross-sections of the cathodes prepared in Inventive Example 1 and Comparative Example 1 were X-ray CT scanned to analyze distribution of carbon black, which was a conductive material, and the results were illustrated in FIGS. 5

and 6.

In the cathode of Comparative Example 1 (portion (a) of FIG. 5), as the cathode active material layer became thicker, the conductive material moved upward to the electrode, and it can be seen that distribution of the conductive material in a thickness direction was non-uniform.

On the other hand, in the cathode of Inventive Example 1 (portion (b) of FIG. 5), it can be seen that distribution of a first active material layer ranging from a border surface between the cathode current collector and the cathode active material layer to a 1/3 point of a thickness direction of the cathode active material layer, a second active material layer ranging from the 1/3 point to a 2/3 point of the thickness direction of the cathode active material layer, and a third active material layer ranging from the 2/3 point of the thickness direction of the cathode active material layer to a surface of the cathode active material layer was uniform.

FIG. 6 graphically illustrates distribution of conductive material amounts (vol%) in a first active material layer, a second active material layer, and a third active material layer, according to results of X-ray CT. As illustrated in FIG. 6, the cathode according to Inventive Example 1 had a deviation of about 9% or less in a conductive material average concentration according to Equation 1 below, while the cathode according to Comparative Example 1 had a deviation of 45% in a conductive material average concentration in the first active material layer and a deviation of 69% in a conductive material average concentration in the third active material layer, according to Equation 1 below. That is, it can be seen that the cathode active material layer of Inventive Example 1 had a very uniform distribution of the conductive material, while the cathode active material layer of Comparative Example 1 had a very non-uniform distribution of the conductive material.

[Equation 1]

$$(|C_0 - C_n|/C_0) \times 100$$

In Equation 1 above,

$C_0$ is an average concentration (vol%) of an entire conductive material in a cathode active material layer; and
$C_n$ is a conductive material concentration (vol%) of an $n^{th}$ active material layer.

**2-4. Evaluation of Ionic Conductivity in Electrode**

A symmetrical cell was created by overlapping two electrodes prepared using the cathode active material composites of Inventive Examples and Comparative Examples, and finally, a liquid electrolyte solution was injected to prepare an ionic conductivity measurement cell. Ionic resistance was measured by impedance analysis of the ionic conductivity measurement cell, and an ionic conductivity value in the electrode was calculated.

**2-5. Tortuosity Evaluation in Electrode**

A tortuosity in the electrode was calculated using the measured ionic conductivity value in the electrode using MacMullin number (Nm) formula. Nm may be defined as follows.

$$N_m = K_{electrolyte} / K_{electrode} = Tortuosity / Porosity$$

$K_{electrolyte}$ refers to ionic conductivity of the liquid electrolyte, and $K_{electrode}$ refers to ionic conductivity of the electrode according to Inventive Examples and Comparative Examples. The liquid electrolyte was prepared to be 1M $LiPF_6$ in a cosolvent mixed with ethylene carbonate (EC)/diethyl carbonate (DEC) at a 1:1 volume ratio. The ionic conductivity of the electrode was calculated by filling the electrode with an EC/DEC solution of 1 M $LiPF_6$ and then measuring conductivity in the thickness direction of the electrode.

Porosity was measured by measuring a pore volume from an adsorption amount according to a change in partial pressure of nitrogen gas at 77 K. A final tortuosity was calculated from measured porosity and McMullin number.

[Table 3]

| | Tortuosity in Electrode | Ionic Conductivity (mS/cm) |
|---|---|---|
| Inventive Example 1 | 7.8 | 0.34 |
| Inventive Example 3 | 7.2 | 0.37 |

(continued)

| | Tortuosity in Electrode | Ionic Conductivity (mS/cm) |
|---|---|---|
| Inventive Example 5 | 8.1 | 0.31 |
| Inventive Example 6 | 5.9 | 0.38 |
| Inventive Example 7 | 5.5 | 0.39 |
| Inventive Example 8 | 5.6 | 0.41 |
| Inventive Example 9 | 6.0 | 0.40 |
| Comparative Example 1 | 13.2 | 0.15 |
| Comparative Example 2 | 10.2 | 0.25 |

As illustrated in Table 3 above, it was confirmed that the electrodes according to Inventive Examples 3 to 8 had an improved tortuosity in the electrode and ionic conductivity, as compared to the electrodes according to Comparative Examples. When the tortuosity of the electrode is affected by the pore structure formed in the electrode, and the conductive material and the binder are unevenly distributed, a high value of the tortuosity may be measured, which may be expected to lengthen an ion transfer path in the electrode and reduce performance of the battery. In Comparative Example 1, it can be seen that uneven distribution of the conductive material and the binder became more extreme due to high loading of the electrode, and a tortuosity of the electrode significantly increased. On the other hand, it can be confirmed that the electrodes prepared according to Inventive Examples 1 to 9 were uniformly formed porous binder scaffolds by suppressing unbalanced movement of the conductive material and the binder that occurred during electrode drying by forming a network through inducing interaction between the conductive material, the binder, and the metal salt, and a tortuosity in the electrode did not significantly increase even with high electrode loading by evenly distributing the cathode active material within the structure. In addition, in the electrodes of Inventive Examples 6 to 8, it can be confirmed that structural characteristics of the porous binder scaffold may be further improved by controlling an introduction point of the metal salt during slurry production to more easily induce interaction between the conductive material, the binder, and the metal salt. Additionally, in Inventive Example 9, it can be confirmed that a porous binder scaffold structure with improved ion conduction properties could be prepared through metal salt leaching by solvent treatment of the prepared electrode.

**2-6. Half-cell Performance Evaluation**

A half-cell was prepared using the cathode prepared in Inventive Example 3 and Comparative Example 1, and capacity was measured under 0.1C/0.1C charge/discharge conditions and 0.1C/0.3 charge/discharge conditions, respectively, and discharge capacity retention rates according to a rate (C-rate) was evaluated and listed in Table 2 below.

Specifically, the half-cell was prepared in a manner, identical to Inventive Example 1, except that lithium metal with a thickness of 200 μm was used as an anode.

The half-cell was charged at a 0.1 C-rate up to 4.5V under constant current/constant voltage (CC/CV) conditions at 25°C, and then cut-off, and capacity was then measured under 0.1C/0.1C charge/discharge conditions by discharging at a 0.1 C-rate up to 3.0V (CC condition), and the C-rate was changed to 0.3C, and capacity under 0.1C/0.3C charge/discharge conditions was measured.

In this case, the relative discharge capacity refers to the value obtained by dividing the discharge capacity at 0.3C based on the discharge capacity at 0.1C, and the discharge capacity retention rate refers to the relative discharge capacity at 0.3C multiplied by 100.

[Table 4]

| Cathode | Relative Discharge Capacity | | Retention Rate (%) |
|---|---|---|---|
| | @0.1 C | @0.3 C | |
| Inventive Example 3 | 1 | 0.9634 | 96.34 |
| Comparative Example 1 | - | - | - |

As illustrated in Table 4 above, it can be seen that the half-cell of the cathode according to Inventive Example 3 effectively maintains discharge capacity even when the rate increased. For example, it can be seen that a cathode according to an embodiment has uniform flow characteristics of lithium ions even when a thickness thereof increases and has excellent output characteristics.

In summary, a lithium battery according to the present disclosure may simultaneously satisfy a high energy density of 400 Wh/kg or more, excellent lifespan characteristics, and stability, by combining a thick film type cathode in which cathode materials are distributed very uniformly in a thickness direction, and a specific anode.

As described above, the present disclosure has been described with specific matters and limited embodiments and drawings, but this is provided to help a general understanding of the present disclosure, and the present invention is not limited to the aforementioned embodiments, and a person skilled in the art to which the present disclosure pertains may make various changes and modifications.

Accordingly, the concept of the present disclosure should not be limited to the described embodiments, and it will be understood that not only the claims to be described below, but also all those that have equivalent modifications to the claims belong to the scope of the present disclosure.

## Claims

1. An electrochemical device comprising:

   a cathode; an anode including an anode current collector, or the anode current collector and lithium metal; and an electrolyte, and having an energy density of 400 Wh/kg or more,
   wherein the cathode includes a cathode current collector; and a cathode active material layer formed on the cathode current collector, wherein the cathode active material includes a porous binder scaffold and cathode active material particles.

2. The electrochemical device of claim 1, wherein the energy density of the electrochemical device is 450 Wh/kg to 650 Wh/kg.

3. The electrochemical device of claim 1, further comprising a separator.

4. The electrochemical device of claim 3, wherein the cathode active material layer is included in an amount of 50% by weight or more, based on a total weight of the electrochemical device.

5. The electrochemical device of claim 4, wherein the cathode active material layer is included in an amount of 60 to 85% by weight, based on a total weight of the electrochemical device.

6. The electrochemical device of claim 1, wherein the cathode active material particles are included in an amount of 80 to 99% by weight, based on a total weight of the cathode active material layer.

7. The electrochemical device of claim 1, wherein the cathode is a thick film type cathode in which a thickness of the cathode active material layer is 50 to 2,000 μm.

8. The electrochemical device of claim 1, wherein the cathode is a thick film type cathode in which a capacity of the cathode active material layer, formed on one surface of the cathode current collector, is 4 to 150 $mAh/cm^2$.

9. The electrochemical device of claim 1, wherein the cathode is a thick film type cathode in which a mixture density (g/cc) of the cathode active material layer is 3.3 to 3.8.

10. The electrochemical device of claim 1, wherein, in the cathode active material layer, the cathode active material particles are evenly dispersed, and the porous binder scaffold is present in an empty space between the particles.

11. The electrochemical device of claim 10, wherein the porous binder scaffold is included in an amount of 0.01 to 40 parts by weight, based on 100 parts by weight of the cathode active material particles.

12. The electrochemical device of claim 10, wherein the porous binder scaffold further comprises a conductive material.

13. The electrochemical device of claim 10, wherein the cathode active material layer further comprises a metal salt.

14. The electrochemical device of claim 13, wherein the metal salt is included in an amount of 0.01 to 50 parts by weight, based on 100 parts by weight of the cathode active material particles.

**15.** The electrochemical device of claim 13, wherein the metal salt is included in or surface adsorbed on at least one of the porous binder scaffold or the cathode active material particles.

**16.** The electrochemical device of claim 13, wherein the metal salt is a sulfonyl group-containing metal salt selected from the following Formula 1 or 2:

[Formula 1]

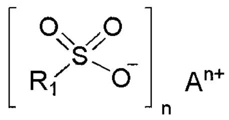

[Formula 2]

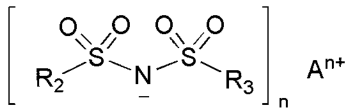

where,

n is 1 or 2;
A is an n-valent cation;
$R_1$ to $R_3$ are each independently fluoro(C1-C7)alkyl or a fluoro group.

**17.** The electrochemical device of claim 16, wherein A is lithium, sodium, zinc, copper, aluminum, silver, gold, cesium, indium, magnesium, or calcium.

**18.** An electrochemical device comprising:

a cathode; an anode including an anode current collector, or the anode current collector and lithium metal; and an electrolyte, and having an energy density of 400 Wh/kg or more,
wherein the cathode includes a cathode current collector; and a cathode active material layer formed on the cathode current collector, and including cathode active material particles, a binder, and a conductive material, wherein, when a cross-section of the cathode active material layer is analyzed using X-ray CT, a deviation between a conductive material concentration ($C_1$) of a first active material layer ranging from a border surface between the cathode current collector and the cathode active material layer to a 1/3 point of a thickness direction of the cathode active material layer, a conductive material concentration ($C_2$) of a second active material layer ranging from the 1/3 point to a 2/3 point of the thickness direction of the cathode active material layer, and a conductive material concentration ($C_3$) of a third active material layer ranging from the 2/3 point of the thickness direction of the cathode active material layer to a surface of the cathode active material layer is 10% or less, based on a conductive material average concentration ($C_0$) of the cathode active material layer.

**19.** The electrochemical device of claim 1 or 18, wherein a half-cell prepared with the cathode has a discharge capacity maintenance rate of 80% or more at 0.3 C relative to a discharge capacity at 0.1 C.

**20.** The electrochemical device of claim 1 or 18, wherein the electrolyte is a liquid electrolyte, a solid electrolyte, or a combination thereof.

**21.** The electrochemical device of claim 1 or 18, wherein a ratio (g/Ah) of an injection amount of the electrolyte relative to a capacity of the electrochemical device is less than 1.2.

**22.** The electrochemical device of claim 1 or 18, wherein the electrolyte is included in an amount of 15 to 30 parts by weight, based on 100 parts by weight of the cathode.

**23.** The electrochemical device of claim 21, wherein the electrochemical device has a 0.1C discharge capacity implementation ratio of 0.9 or more relative to a designed capacity.

**24.** The electrochemical device of claim 1 or 18, wherein the electrochemical device is a lithium metal battery or an anode-free lithium battery.

**25.** The electrochemical device of claim 1 or 18, wherein the cathode has a tortuosity ($\tau$) of 6 or less in the electrode calculated by the following relationship,

[Relationship]

$$\tau \text{ (Tortuosity)} = (K_{electrolyte}/K_{electrode}) \times \text{(Porosity)}$$

where, $K_{electrolyte}$ refers to ionic conductivity of the electrolyte, $K_{electrode}$ refers to ionic conductivity of the cathode, and Porosity refers to porosity of the cathode.

FIG. 1

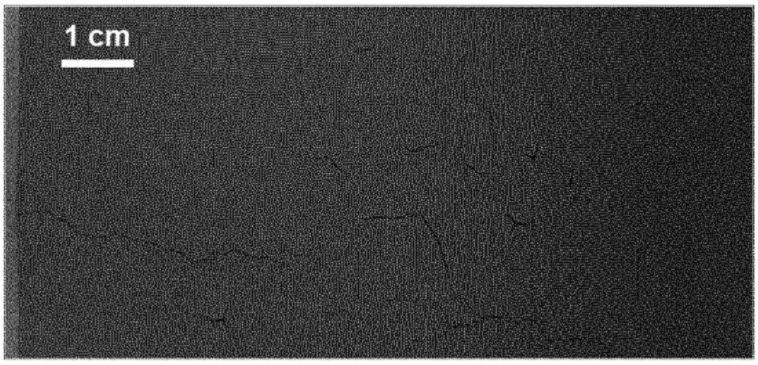


FIG. 2

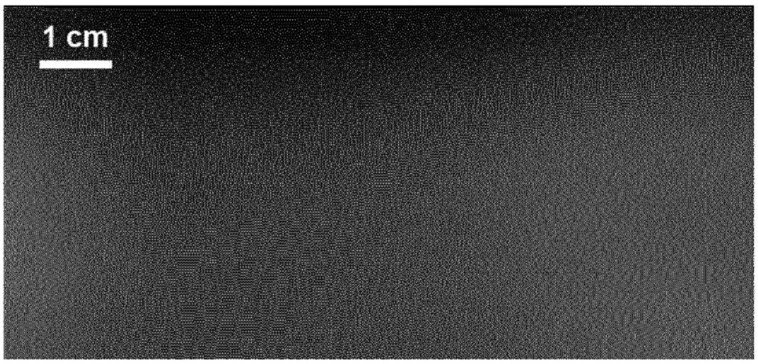

FIG. 3

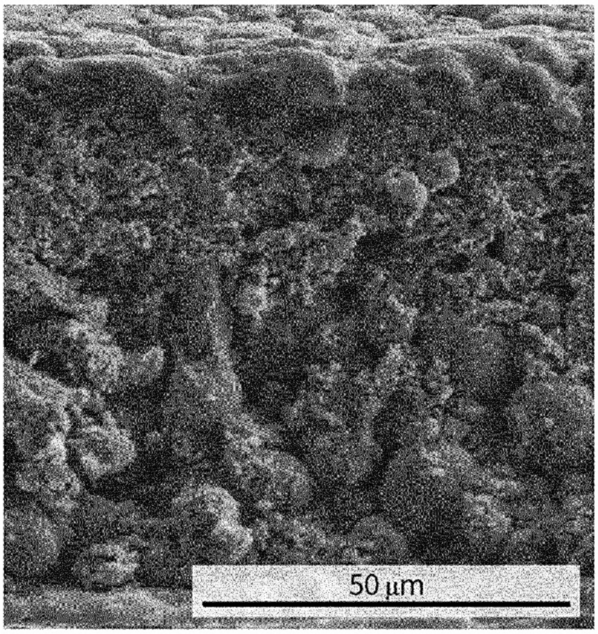


FIG. 4

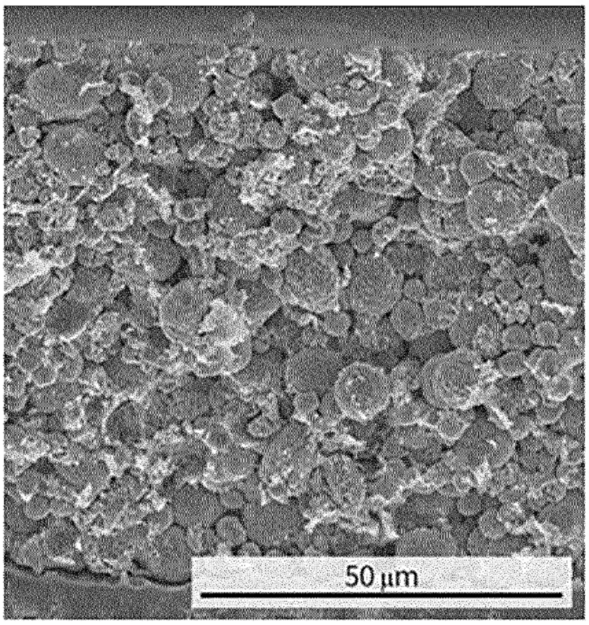

FIG. 5

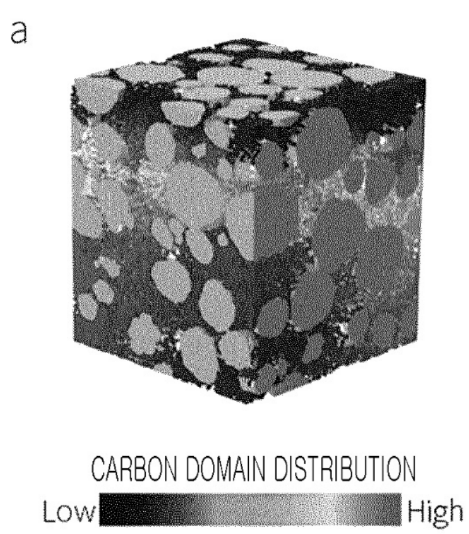

FIG. 6

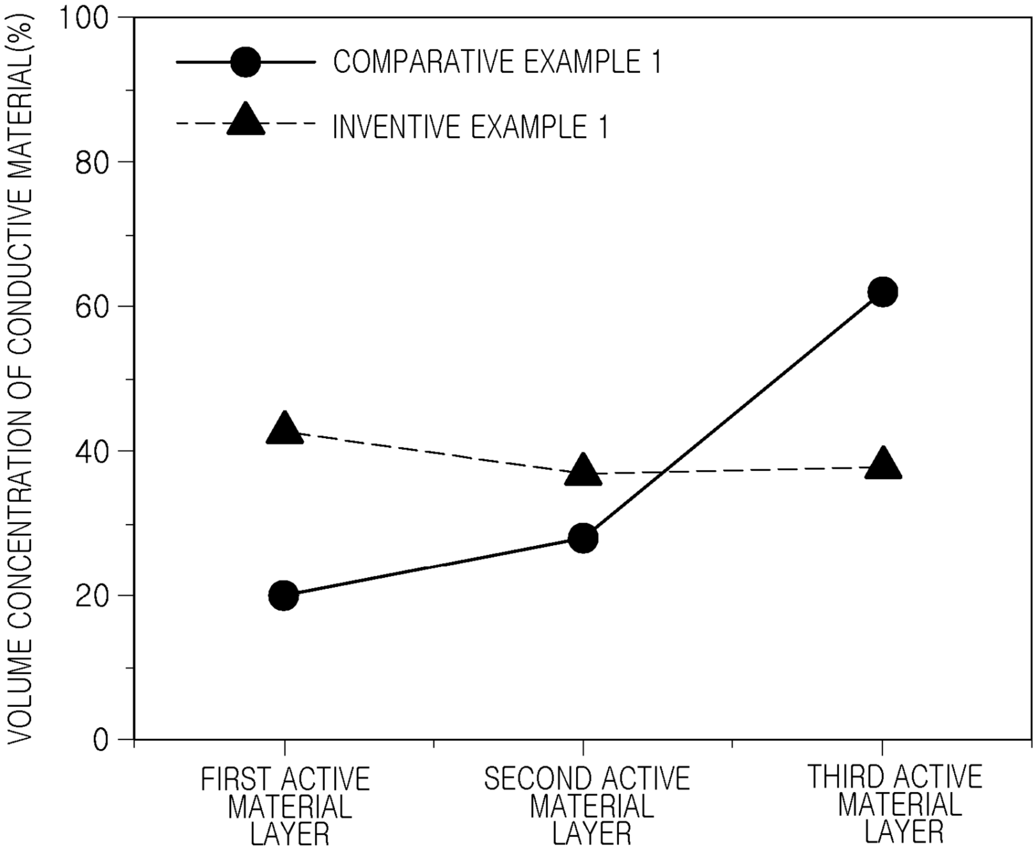
VOLUME CONCENTRATION OF CONDUCTIVE MATERIAL(%)
100
80
60
40
20
0
COMPARATIVE EXAMPLE 1
INVENTIVE EXAMPLE 1
FIRST ACTIVE MATERIAL LAYER
SECOND ACTIVE MATERIAL LAYER
THIRD ACTIVE MATERIAL LAYER

## INTERNATIONAL SEARCH REPORT

International application No.
**PCT/KR2024/001188**

### A. CLASSIFICATION OF SUBJECT MATTER

**H01M 4/131**(2010.01)i; **H01M 10/052**(2010.01)i; **H01M 4/525**(2010.01)i; **H01M 4/505**(2010.01)i; **H01M 4/62**(2006.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/131(2010.01); H01M 12/08(2006.01); H01M 4/13(2010.01); H01M 4/38(2006.01); H01M 4/505(2010.01); H01M 4/62(2006.01); H01M 4/66(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전기화학소자(electrochemical device), 에너지 밀도(energy density), 다공성 바인더 스캐폴드(porous binder scaffold), 양극 활물질(positive electrode active material), 후막(thick layer)

### C. DOCUMENTS CONSIDERED TO BE RELEVANT

| Category* | Citation of document, with indication, where appropriate, of the relevant passages | Relevant to claim No. |
|---|---|---|
| A | CN 112133921 A (SVOLT ENERGY TECHNOLOGY COMPANY LIMITED) 25 December 2020 (2020-12-25)<br>See claims 1, 3, 9 and 10. | 1-25 |
| A | JP 2018-113108 A (WASEDA UNIV.) 19 July 2018 (2018-07-19)<br>See claims 1-2 and 8. | 1-25 |
| A | JP 2019-071225 A (NISSAN MOTOR CO., LTD. et al.) 09 May 2019 (2019-05-09)<br>See entire document. | 1-25 |
| A | KR 10-2013-0086805 A (SAMSUNG SDI CO., LTD.) 05 August 2013 (2013-08-05)<br>See entire document. | 1-25 |
| A | US 2019-0252688 A1 (PANASONIC INTELLECTUAL PROPERTY MANAGEMENT CO., LTD.) 15 August 2019 (2019-08-15)<br>See entire document. | 1-25 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 May 2024** | **01 May 2024** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

INTERNATIONAL SEARCH REPORT

International application No.
PCT/KR2024/001188

C. DOCUMENTS CONSIDERED TO BE RELEVANT

| Category* | Citation of document, with indication, where appropriate, of the relevant passages | Relevant to claim No. |
|---|---|---|
| A | LIU, W. et al. 3D Porous Sponge-Inspired Electrode for Stretchable Lithium-Ion Batteries. Adv. Mater. 2016, vol. 28, pp. 3578-3583. See entire document. | 1-25 |

Form PCT/ISA/210 (second sheet) (July 2022)

**INTERNATIONAL SEARCH REPORT**
**Information on patent family members**

International application No.
**PCT/KR2024/001188**

| Patent document cited in search report | Publication date (day/month/year) | Patent family member(s) | Publication date (day/month/year) |
|---|---|---|---|
| CN 112133921 A | 25 December 2020 | None | |
| JP 2018-113108 A | 19 July 2018 | CN 110199427 A | 03 September 2019 |
| | | CN 110199427 B | 28 June 2022 |
| | | JP 6860125 B2 | 14 April 2021 |
| | | US 11081701 B2 | 03 August 2021 |
| | | US 2020-0006780 A1 | 02 January 2020 |
| | | WO 2018-128099 A1 | 12 July 2018 |
| JP 2019-071225 A | 09 May 2019 | CN 111213263 A | 29 May 2020 |
| | | CN 111213263 B | 03 November 2023 |
| | | EP 3696891 A1 | 19 August 2020 |
| | | JP 7029922 B2 | 04 March 2022 |
| | | US 2020-0295346 A1 | 17 September 2020 |
| | | WO 2019-074025 A1 | 18 April 2019 |
| KR 10-2013-0086805 A | 05 August 2013 | CN 103227329 A | 31 July 2013 |
| | | EP 2621001 A1 | 31 July 2013 |
| | | JP 2013-157318 A | 15 August 2013 |
| | | US 2013-0196227 A1 | 01 August 2013 |
| US 2019-0252688 A1 | 15 August 2019 | US 11276861 B2 | 15 March 2022 |
| | | WO 2019-097830 A1 | 23 May 2019 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **CHARLES HANSEN**. Hansen Solubility Parameters: A User's Handbook. CRC Press, 2007
- **ALLAN F. M. BARTON**. *The CRC Handbook and Solubility Parameters and Cohesion Parameters*, 1999